(19) Europäisches Patentamt
European Patent Office
Office européen des brevets

(11) EP 3 456 750 B1

(12) **EUROPEAN PATENT SPECIFICATION**

(45) Date of publication and mention of the grant of the patent:
**22.04.2020 Bulletin 2020/17**

(51) Int Cl.:
***C08F 220/34*** *(2006.01)* ***C08F 8/44*** *(2006.01)*

(21) Application number: **18201977.8**

(22) Date of filing: **19.11.2010**

(54) **ANTI MICROBIAL COMPOUNDS AND THEIR USE**

MIKROBIELLE VERBINDUNGEN UND DEREN VERWENDUNG

COMPOSES MICROBIENS ET LEUR UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.11.2009 EP 09014447**

(43) Date of publication of application:
**20.03.2019 Bulletin 2019/12**

(62) Document number(s) of the earlier application(s) in accordance with Art. 76 EPC:
**10782554.9 / 2 501 732**

(73) Proprietor: **Croda International PLC**
**Goole, East Yorkshire DN14 9AA (GB)**

(72) Inventor: **MAHMOUD, Hossein**
**NL-5144 VV Waalwijk (NL)**

(74) Representative: **King, Angela Louise et al**
**Croda International Plc**
**Intellectual Property Department**
**Cowick Hall**
**Snaith**
**Goole, East Yorkshire DN14 9AA (GB)**

(56) References cited:
**WO-A1-2009/127600 DE-A1- 10 022 406**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

Technical Field

The invention relates to anti microbial compounds, their use in applications like coatings, in coating systems as primers and their use in methods for preparing latexes.

Background

Anti microbial compounds and their use are known in the art. For example WO02/10242, discloses a polyurethane dispersion comprising an anti-microbial compound and a method of making thereof. The disclosed dispersion is stable in an alcohol-water mixture and is a reaction product of (a) an isocyanate functional pre-polymer comprising the reaction product of: i) at least one oligomeric polyactive hydrogen compound, wherein said compound is an alkyl, aryl, or aralkyl structure optionally substituted in and/or on the chain by N, O, S and combinations thereof, and wherein the compound is insoluble in 50:50 weight percent of said alcohol-water mixture; ii) at least one polyisocyanate; and iii) at least one polyactive hydrogen compound soluble in the alcohol-water mixture selected from the group consisting of a compound containing an ionic group, a compound containing a moiety capable of forming an ionic group, a compound containing a polyester, polyether, or polycarbonate group having a ratio of 5 or less carbon atoms for each oxygen atom, and mixtures thereof; and (b) at least one polyfunctional chain extender.

A disadvantage of polyurethane dispersions comprising an anti-microbial compound known from WO02/10242 is that once a coating has been applied to a surface of an object, the anti-microbial is poorly immobilized in the coating especially at the surface of the coating, which may result in easy release of the anti-microbial compound from the coated surface, in particular when such surfaces are frequently cleaned with organic solvents or even with water, optionally including surfactants.

Another disadvantage of the polyurethane dispersions known from the prior art is that a stable dispersion requires the use of substantial amounts of organic solvents during the manufacture of the dispersions, which solvents remain present as a substantial ingredient in the final product.

Yet another disadvantage of polyurethane dispersions comprising an anti-microbial compound known from WO02/10242 is that the anti-microbial compound is ionically bonded to a free carboxylic acid group of the polyurethane in the polyurethane dispersion. The application of the polymeric antimicrobial compound is therefore limited to polyurethane dispersions.

It is an object of the present invention to provide an anti-microbial compound that omits or at least mitigates at least part of the above mentioned draw-backs.

It is another object of the present invention, to provide antimicrobial compounds that can be used in combination with a wide variety of (polymeric) binders, and thus not limited to polyurethane dispersions comprising such antimicrobial compounds.

Summary of the invention

At least one of these objects is achieved by providing compounds comprising building blocks according to the following formulae:

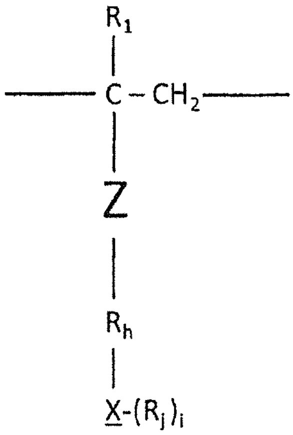

[BB1]

Formula 1A

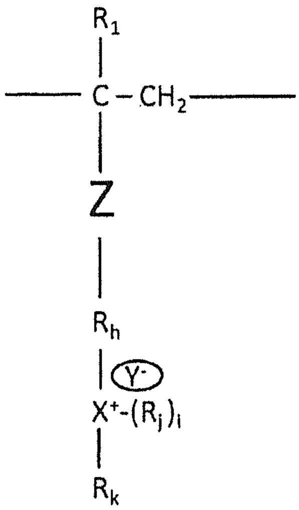

[BB2]

Formula 1B

(also shown in FIG. 1.)
wherein:

- [BB1] is building block 1;
- [BB2] is building block 2;
- $R_1$ is H or $CH_3$,
- Z is a bridging group, selected from the group consisting of ester groups (-C(=O)O-) and amide groups (-C(=O)-NH-).
- X is an element selected from nitrogen, phosphorus, oxygen and sulfur;
- i is an integer which is 2 in case of nitrogen and phosphorus and 1 in case of oxygen and sulfur;
- $R_j$ denotes groups which may be the same or different and comprise a $C_1$-$C_{20}$ hydrocarbyl group;
- $R_k$ is a $C_7$-$C_{50}$ hydrocarbyl group;
- $Y^-$ is a negatively charged ion;

and wherein the molar fraction of [BB2] in a molecule of the compound is between 0.3 and 1 and the weight average molecular weight of the compound is between 1.000 and 100.000 g/mol.

The polymeric antimicrobial compounds according to the present invention, are preferably used in a primer composition, which further comprises a solvent, and as a surfactant in an emulsion polymerization process.

Detailed description

**Materials**

Thus the invention relates to a compound comprising building blocks according to the general formulae shown in Fig. 1, wherein:

- [BB1] is building block 1;
- [BB2] is building block 2;
- $R_1$ is H or $CH_3$,
- Z is a bridging group, selected from the group consisting of ester groups (-C(=O)O-) and amide groups (-C(=O)-NH-).X is an element selected from nitrogen, phosphorus, oxygen and sulfur;
- i is an integer which is 2 in case of nitrogen and phosphorus and 1 in case of oxygen and sulfur;
- $R_j$ denotes groups which may be the same or different and comprise a $C_1$-$C_{20}$ hydrocarbyl group;
- $R_k$ is a $C_7$-$C_{50}$ hydrocarbyl group;
- $Y^-$ is a negatively charged ion;

and wherein the molar fraction of [BB2] in a molecule of the compound is between 0.3 and 1 and the weight average molecular weight of the compound is between 1.000 and 100.000 g/mol.

Preferably, the $R_j$ groups comprise $C_2$-$C_{10}$ groups. The $R_j$-groups may be the same or different.

In a first embodiment, the bridging group Z comprises an ester group. The compounds according to the present invention then comprise building blocks according to the following formulae:

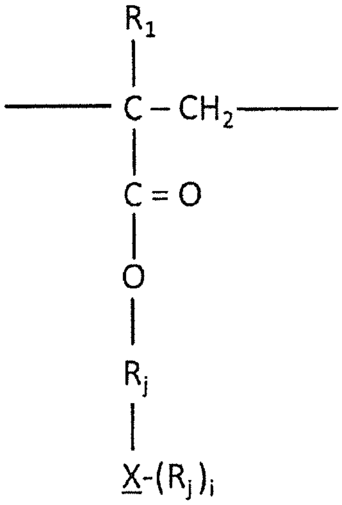

[BB1] E

Formula 2A

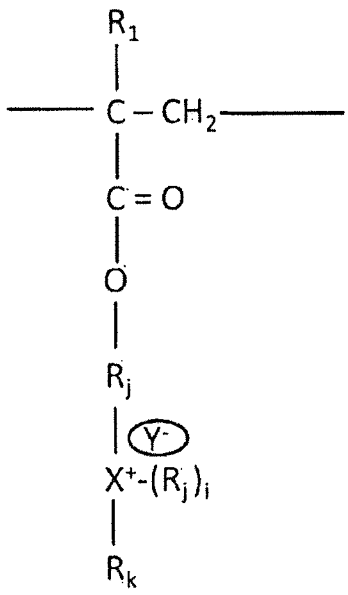

[BB2] E

Formula 2B

wherein:

[BB1]$_E$ is building block 1;
[BB2]$_E$ is building block 2;
$R_1$ is H or $CH_3$,
X is an element selected from nitrogen, phosphorus, oxygen and sulfur;
i is an integer which is 2 in case of nitrogen and phosphorus and 1 in case of oxygen and sulfur;
$R_j$ denotes groups which may be the same or different and comprise a $C_1$-$C_{20}$ hydrocarbyl group;
$R_k$ is a $C_7$-$C_{50}$ hydrocarbyl group;
$Y^-$ is a negatively charged ion;
and wherein the molar fraction of [BB2]$_E$ in a molecule of the compound is between 0.3 and 1 and the weight average molecular weight of the compound is between 1.000 and 100.000 g/mol.

In a second embodiment, the bridging group Z comprises an amide group. The compounds according to the present invention then comprise building blocks according to the following formulae:

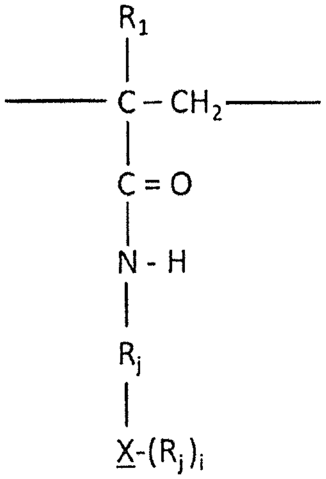

$[BB1]_A$

Formula 3A

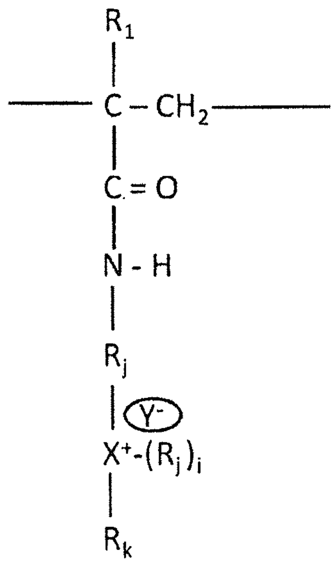

$[BB2]_A$

Formula 3B

wherein:

$[BB1]_A$ is building block 1;
$[BB2]_A$ is building block 2;
$R_1$ is H or $CH_3$,
X is an element selected from nitrogen, phosphorus, oxygen and sulfur;
i is an integer which is 2 in case of nitrogen and phosphorus and 1 in case of oxygen and sulfur;
$R_j$ denotes groups which may be the same or different and comprise a $C_1$-$C_{20}$ hydrocarbyl group;
$R_k$ is a $C_7$-$C_{50}$ hydrocarbyl group;
$Y^-$ is a negatively charged ion;
and wherein the molar fraction of $[BB2]_A$ in a molecule of the compound is between 0.3 and 1 and the weight average molecular weight of the compound is between 1.000 and 100.000 g/mol.

Compounds according to the present invention (comprising the building blocks as shown in Formulae 1A-1B, 2A-2B and 3A-3B, respectively) comprise derivatives of acrylates ($R_1$ is H) or methacrylates (i.e. $R_1$ is $CH_3$) and contain a moiety that provides amphiphilic character to the compound and anti-microbial functionality (i.e. - $R_j$-$X^+(R_j)_i$-$R_k$). Hereinafter, descriptions referring to [BB1] are understood as also referring to $[B61]_E$ and $[BB1]_A$. Similarly, descriptions referring to [BB2] are understood as also referring to $[BB2]_E$ and $[BB2]_A$.
In order to achieve at least one of the above specified objectives of the present invention, compounds according to the present invention comprise polymers having a weight average molecular weight of at least 1.000 g/mol to prevent bleeding of the anti-microbial out of a dried and/or cured coating layer comprising such anti-microbial compound and a polymeric binder. The polymeric anti-microbial compound may be immobilized in a an applied coating layer by entanglements between the polymeric anti-microbial compound and the molecules of a polymeric binder, thus preventing bleeding even when a coated object or surface is rinsed or cleaned with a solvent. On the other hand, for the purposes of providing an anti-microbial functionality to a coated surface, the anti-microbial compound is required to have a certain mobility in a wet coating layer (i.e. a coating layer just after being applied and before drying and curing) to be able to migrate towards the interface of the coating layer with air. Therefore the weight average molecular weight is preferably not higher than 100.000 g/mol. For the compound to be able to (spontaneously) migrate to the surface, it is also preferred that the compound has surface active properties. Therefore the fraction of [BB2] in a molecule of the compound according to the present invention preferably ranges between 0.3 and 1 and the hydrocarbyl group $R_k$ comprises at least 7 carbon atoms. Compounds comprising building blocks as shown in Figure 1 and a fraction of [BB2] of below 0.3 and/or hydrocarbyl groups $R_k$ comprising more than 50 carbon atoms will poorly dissolve in a polar solvent, in particular water, and are less suitable for the purposes of the present invention.

Advantages of compounds according to the present invention is that they are soluble in a wide variety of solvents, in particular polar solvents, such as water, ethanol, IPA (isopropylalcohol) and the like, which enables the use of the anti-microbial compounds in combination with a wide variety of (polymeric) binders. Preferably water is used as a solvent in these applications.

Without wanting to be bound to any theory, the inventor believes that the anti-microbial compound at least partly migrates to the coating-air interface and that the molecules of the anti-microbial compound may be immobilized, once a coating comprising such compound has been applied, dried and/or cured.. A thus coated surface will more or less have excellent permanent anti-microbial properties.
Another advantage of compounds according to the present invention is that due to the amphiphilic character they act as surface active agents.

Preferably, $R_k$ in the compounds according to the present invention preferably comprises a $C_{10}$-$C_{25}$ hydrocarbyl group, more preferably a $C_{11}$-$C_{20}$ hydrocarbyl group, more preferably a $C_{12}$-$C_{16}$ hydrocarbyl group and even more preferably a linear $C_{14}$-alkyl group. The advantages of such a group are that it has excellent anti-microbial properties and that it provides an optimal amphiphilic character of the compound. The latter enables the compound of being soluble in many solvents, in particular in water. The compound according to this embodiment shows good surface active properties..

Preferably, the molar fraction of [BB2] in a molecule of the compound according to the present invention is between 0.50 and 0.99, preferably between 0.7 and 0.98, more preferably between 0.90 and 0.97. An advantage of a high molar fraction of [BB2] (i.e. close to 1) is that the solubility in polar solvents, in particular water is high, so that high concentrations of the polymeric antimicrobial compound can be obtained.
Another advantage of a high molar fraction of [BB2] is that the polymeric anti-microbial compound has improved surface active properties.

In one embodiment, a compound according to the present invention comprises dimethylamino-ethylmethacrylate as $[BB1]_E$ and bromo-(tetradecane-dimethylamino-ethylmethacrylate) as $[BB2]_E$. The molar fraction of $[BB2]_E$ in a molecule of the compound is between 0.90 and 0.97 and the weight average molecular weight ranges between 7.500 and 35.000 g/mol, determined with GPC.

In another embodiment, a compound according to the present invention comprises dimethylamino-propyl methacryl amide as $[BB1]_A$ and bromo-(tetradecane-dimethylamino-propyl methacryl amide) as $[BB2]_A$. The molar fraction of $[BB2]_A$ in a molecule of the compound is between 0.90 and 1.0 and the weight average molecular weight ranges between 10.000 and 50.000 g/mol, determined with GPC.

Preferably , the negatively charged ion $Y^-$ in the compound according to the present invention is an anion selected from the group consisting of nitrate, sulfate, phosphate and halides (e.g. chloride, bromide, iodide and fluoride). More preferably the negatively charged ion $Y^-$ is selected from the group consisting of chloride, bromide and iodide.
An advantage of such anions is that they positively contribute to the solubility of the polymeric anti-microbial compounds according to the present invention.

The present invention further pertains to compositions comprising a compound according to the present invention and a solvent. The solvent preferably is a polar solvent, in particular water.

## Applications

The present invention also relates to the use of compounds according to the present invention in a primer composition. The primer composition comprises a compound according to the present invention having a weight average molecular weight ($M_w$) in a range between 1.000 and 100.000 g/mol and a polar solvent, such as water, ethanol or IPA. For environmental reasons, preferably water is used as a solvent.
The weight average molecular weight of the compound is preferably in a range between 2.000 and 10.000 g/mol, more preferably between 3.000 and 6.000 g/mol, for example 5000 g/mol.

In this application of an anti-microbial compound according to the present invention it is advantageous to use a compound according to the present invention with a weight average molecular weight ($M_w$) according to a preferred range as stated above. A compound having a relatively low $M_w$ has the tendency to bleed from a final dried and/or cured coating layer, especially when a thus coated surface is rinsed or cleaned with a solvent. A compound having a relatively high $M_w$ may limit the migration speed of the compound towards the coating-air interface, which may lead to unsatisfactory low anti-microbial functionality at the coating-air interface. A larger amount of anti-microbial compound is then required to obtain satisfactory anti-microbial functionality. This implies that the required layer thickness of the first layer of a composition according to the present invention (primer) increases with increasing $M_w$ of the compound.
The $M_w$ of the compound according to the present invention may be optimized in order to find a balance between the above described properties (i.e. migration speed, tendency to bleeding, required amount of anti-microbial compound, required layer thickness of the primer).

In this application of an anti-microbial compound according to the present invention, the molecular weight

distribution, expressed as the ratio between the weight average molecular weight and the number averaged molecular weight (Mw/Mn, i.e. the polydispersity index (PDI)) may be in a range between 1 and 10, preferably between 1.5 and 5, more preferably between 1.9 and 3.

In this application of an anti-microbial compound according to the present invention, the fraction of [BB2] in a molecule of the compound according to the present invention is in a range from 0.50 to 1, preferably between 0.8 and 0.99.

It is noted here, that other anti-microbial compounds may be suitable for use in this application, in particular an anti-microbial compound selected from the group comprising: *N*-alkylated polyethylenimine (N-alkylated-PEI), Poly(4-vinyl-*N*-alkylpyridinium bromide), N-hexylated poly(4-vinylpyridine (Hexyl-PVP), polystyrene block -poly(4-vinyl-*N*-methylpyridinium iodide) (P4VMP)[(PS-b-P4VMP), poly[tributyl(4-vinylbenzyl)phosphonium chloride (PTBVBP), poly(arylenesulfonium) salts. In an embodiment the primer composition may be used in a method for applying an anti-microbial coating on a substrate comprising the steps of:

- providing a substrate;
- applying a fist layer of the primer composition according to the present invention onto the substrate;
- drying;
- applying a second layer of a coating composition onto the thus obtained substrate.

The first layer may be applied by any known coating technique suitable for coating the objects to be coated, for example spray-coating, brushing, rod-coating and the like. The layer thickness of the first layer before drying may be in a range between 10 and 500 μm, preferably between 25 and 250 μm, more preferably between 50 and 150 μm, for example typically 100 μm.

The second layer of a coating composition may comprise a polymer dissolved in a solvent; a polymer precursor dispersed or dissolved in a solvent and cured after applying; or a (stabilized) polymer dispersion, i.e. a latex.

In an embodiment, the coating composition used in the method for coating a substrate comprises a latex composition comprising at least one polymer selected from the group comprising polystyrene, polyacrylate, polymethacrylate, natural rubber and derivatives thereof, for example polybutylmethacrylate.

The second layer of a coating composition may be applied after drying of the first layer of a composition according to the present invention. It suffices to dry the first layer until it is visually dry, which means that a person viewing the coated surface, preferably at several angles, obtains the visual impression that the coated surface is dry (e.g. decreased gloss of the coated surface). Usually it takes about 1h for the first layer to dry.

The second layer may be applied by any known coating technique suitable for coating the objects to be coated, for example spray-coating, brushing, rod-coating and the like. The layer thickness of the first layer before drying may be in a range between 10 and 500 μm, preferably between 25 and 250 μm, more preferably between 50 and 150 μm, for example typically 100 μm.

The present invention also relates to the use of compounds according to the present invention in a composition suitable for use in a method for preparing a latex composition. The concentration of the compound according to the present invention in such a composition, is then preferably above the critical micelle concentration (cmc).

Preferably the compound is dissolved in an amount between 1 and 100 times the cmc, more preferably between 2 and 50 times the cmc, and most preferably between 5 and 35 times the cmc. The critical micelle concentration is the concentration (in any desired unit, % wt/wt, mol/l, gr/l, etc, usually in mol/l) of a surface active agent (e.g. soap) above which micelles are formed in the solution. In the context of the present invention, the compounds according to the present invention may act as surface active agents. Micelles are aggregates of molecules of a surface active agent. The aggregates are formed such that, the aggregates comprise a polar outer shell and an apolar inner core, or vice versa, depending on the polarity of the solvent.

Compositions according to this embodiment are suitable compositions for performing an emulsion polymerization in, because the micelles may take up and stabilize monomers, which monomers are usually immiscible with water. The micelles comprising monomers can act as small reactors.

The compounds according to the present invention, stabilize the monomer-in-water emulsion. In this application of an anti-microbial compound according to the present invention it is advantageous that the compound according to the present invention has a weight average molecular weight above 10.000 g/mol, preferably between 10.000 and 90.000 g/mol. Such compounds usually show a low cmc, which implies that relatively small amounts of the compound are required to form micelles.

Again it is noted, that other anti-microbial compounds may be suitable for use in this application, in particular an anti-microbial compound selected from the group comprising: *N*-alkylated polyethylenimine (N-alkylated-PEI), Poly(4-vinyl-*N*-alkylpyridinium bromide), N-hexylated poly(4-vinylpyridine (Hexyl-PVP), polystyrene block -poly(4-vinyl-*N*-methylpyridinium iodide) (P4VMP)[(PS-b-P4VMP), poly[tributyl(4-vinylbenzyl)phosphonium chloride (PTBVBP), poly(arylenesulfonium) salts.

In an embodiment, the present invention relates to a method for preparing a latex composition, the method

comprising the steps of:

- providing a first composition comprising a compound according to the present invention and water, wherein the concentration of the compound in the first composition is above the critical micelle concentration (cmc);
- mixing the first composition with a monomer;
- heating the obtained mixture to a temperature between 50°C and 90°C;
- optionally adding an initiator;
- reacting for a period between 1 and 10 hours.

By continuously stirring an emulsion of monomer droplets in water is maintained. The monomer droplets are stabilized due to the presence of a compound according to the present invention on the monomer-water interface of the monomer droplets.
A polymerization reaction may be initiated by UV-radiation, ultrasonic agitation or any other method known to the skilled man. The monomers will then polymerize.
If an initiator is added to the system, a part of the initiator molecules may be captured by monomer droplets (micelles comprising monomer and initiator). Another part may be in the water-phase and being stabilized by a compound according to the present invention (micelles comprising initiator). When the initiator is activated (thermally or by radiation), a polymerization reaction may be started in the stabilized monomer droplets or in the micelles comprising initiator. In the latter the monomer may be provided due to diffusion of the monomer through the aqueous phase. In both mentioned cases the micelles act as small reactors. For practical reasons (e.g. large scale industrial production), a thermally activated initiator is preferred. During the polymerization reaction the compounds according to the present invention stabilize the reaction mixture (i.e. monomers, formed oligomers and polymers and initiators). After the polymerization reaction the compounds according to the present invention stabilize the formed polymer particles in the latex.
Preferably the monomer used in the method for preparing a latex composition, is selected from the group consisting of styrene and butyl(meth)acrylate.

**Measurement techniques**

*Conversions Monitored by GC*

During performing the polymerizations (i.e. preparation of a polymeric anti-microbial compounds according to the present invention), the conversion is monitored by GC. At certain intervals a sample is taken and the monomer content is analyzed. Before injection, all samples are dissolved in THF to a concentration of 20-40 mg/mL. The analyses are carried out on a HP Gas Chromatographer Model HP5890 series II gas chromatograph with a HP Ultra 2 crosslinked 5% Me-Ph-Si column (25m x 0.32 mm x 0.52 μm film thickness) and fitted with a split injector and autosampler. The injection volume is 1.0 μL and helium was used as mobile phase. The detection is performed using a FID detector, which is kept at constant temperature of 250 °C. The temperature profile used for the analyses is as follows:

- Keep initial temperature of 40°C for 0 minutes
- Heat to 100°C at 5°C/min
- Heat to 275°C at 25°C/min
- Keep final temperature of 275 for 2 minutes
- Cool down to 40°C

The conversion at any time may be calculated according to the following formula:

$$Conversion(t) = \left(1 - \frac{monomer\ content\ at\ t = t}{monomer\ content\ at\ t = 0}\right) * 100\%$$

*Molecular Weight Determination by GPC*

GPC is used to determine the number and weight average molecular weight ($M_n$ and $M_w$, respectively) and polydispersity index (PDI) of the polymers. Before injection, the polymer samples are dissolved in THF to a concentration of 1-2 mg/mL and filtered over a 13mm x 0.2μm PTFE filter, PP housing (Altech). GPC analyses are carried out using a Waters model 510 pump, a model 410 refractive index detector (at 40°C) and a model 486 UV detector (at 254 nm) in series. Injections are done by a Waters model WISP 712 autoinjector, using an injection volume of 50μL. The columns used are a PLgel guard (5μm particles) 50 x 7.5 mm column, followed by two PLgel mixed-C (5 μm particles) 300 x 7.5

mm columns at 40°C in series. THF was used as eluent at a flow rate of 1.0 mL/min. Calibration has been done using polystyrene standards (polymer Laboratories, $M_n$ = 580 to 7.1 x$10^6$ g/mol). Data acquisition and processing are performed using Water Millenium32 (v4.0) software.

*Molecular Structure by MALDI-TOF and NMR*

Matrix Assisted Laser Desorption Ionization-Time of Flight-Mass spectroscopy (MALDI-TOF-MS) is carried out on a Voyager DE-STR from Applied Biosystems. The matrix trans-2-[3-(4-tert-butylphenyl)-2-methyl-2-propenylidene] malononitrile (DCTB) is synthesized according to literature procedures . Potassium trifluoroacetate (Aldrich, >99%) was added to poly(cyclohexene carbonate) PCHC as cationization agents. The matrix is dissolved in THF at a concentration of 40 mg•$mL^{-1}$. The potassium trifluoroacetate salt is added to THF at typical concentrations of 1 mg•$mL^{-1}$. Polymer is dissolved in THF at approximately 1mg•$mL^{-1}$. In a typical MALDI-ToF-MS analysis the matrix, salt and polymer solution are premixed in a ratio of 10:1:5. The premixed solutions are handspotted on the target well and left to dry. Spectra are recorded in both the linear mode and reflector mode. Data analysis is done using the software DATA EXPLORER version 4.0 from Applied Biosystems. Also this software is used in combination with an in-house developed software tool.
$^1$H-NMR (Hydrogen Nuclear Magnetic Resonance) spectra are recorded on a Varian Gemini 300-spectrometer. Data are processed using the Hummingbird Connectivity 7.0. Samples are dissolved in $CDCl_3$ (100 mg/mL).

*Dynamic Light Scattering (DLS).*

DLS measurements are performed with a Brookhaven Instruments Corp. DLS apparatus that consists of a BI-200 goniometer, a BI-2030 digital correlator, and an Ar ion laser (LEXEL Lasers) with a wavelength of 488 nm. The scattering angle used for the measurements is 90°. A refractive index matching bath of filtered decalin surrounds the scattering cell, and the temperature is controlled at 25 °C.
DLS measurements may be used for conversion measurements during emulsion polymerization.

*Critical Micelle Concentration (cmc) bv conductivity measurements*

cmc-s are determined by measuring the conductivity of a surfactant solution as a function of the surfactant concentration. A plot is obtained that shows an inflection point that coincides with the critical micelle concentration (see Fig 2). The reduced gradient above the cmc is due the fact that all of the surfactant ions added after the cmc are incorporated into micelles, therefore contributing less to an increase in the conductivity of the solution.
The invention will now be explained by the following examples and with reference to the appended Figures 1 and 2.

Fig. 1 shows the formulae of the building blocks [BB1] and [BB2];
Fig. 2 shows a graph in which the conductivity of a solution of a surface active compound is plotted (y-axis) against the concentration of the solution. The inflection point coincides with the critical micelle concentration of the solution.

Example 1: preparation of poly bromo-(tetradecane-dimethylamino-ethylmethacrylate)

Dimethylamino-ethylmethacrylate (DMAEMA) was dissolved in 3 times by weight with respect to the amount of DMAEMA of butyldiglycol (2,5-dimethyl-2,5-di(tert-butylperoxy)hexane). The reaction mixture was degassed with Nitrogen under stirring for at least 15 minutes. The reaction mixture was then heated to 120°C and when this temperature was reached 3.7 wt% with respect to pDMAEMA Trigonox®101 was added as an initiator. The reaction proceeded for 2 hours, after which 1.06 times by weight with respect to the amount of pDMAEMA of 1-bromotetradecane was added. The reaction proceeded during at least 6 hours at reflux temperature about 160°C,
$^1$H NMR analysis before and after quaternization confirmed that 95% of the pendant amines were quaternized (i.e the molar fraction of $[BB2]_E$ in the molecules was 0.95), on the basis of the $_CH_2_N_$ multiplet and the $_N_(CH_3)_2$ multiplet of PDMAEMA at 2.6 and 2.2 ppm, respectively, which decreased to the benefit of two new signals: a singlet at 3.1 ppm for the methyl groups $[_NÞ_(CH_3)_2]$ and a multiplet at 3.4 ppm for the methylene protons $(_CH_2_NÞ_CH_2)$ of the quaternized units.
The weight average molecular weight was 75.000 g/mol. Universal calibration using Mark-Howing parameters, Alpha(0.664) and k(0.000148) values of pDMAEMA were used for homopolymers pDMAEMA.

Example 2: Coating a substrate with a primer comprising the compound of example 1 followed by a second coating comprising a latex.

The compound obtained in example 1 was dissolved in water in a concentration of 30% wt/wt. The solution

was applied onto a substrate (by brushing, spraying or the like), such that a wet layer thickness of about 100 $\mu$m was obtained. After drying for approximately 1 hour, a second coating comprising a waterborne butylmethacrylate (BMA) latex was applied. During drying and curing of the coating, at least a part of the anti-microbial primer migrated towards the surface of the coating, thus providing an anti-microbial surface.

Example 3: Emulsion polymerization of butylmethacrylate using the compound of example 1 as a surfactant.

A recipe for emulsion polymerization of BMA which is stabilized by synthesized polymeric surfactant poly tetradecanedimethylaminoethylmetha-acrylate (pTDMAEMA) with concentration of 30x more than cmc is as follows: 8,0 grams (0.056 mol) of distilled BMA, 72.0 grams (4.0 mol) of dionized $H_2O$, 0.010 grams ($3.51 \times 10^{-7}$ mol) of synthesized polymeric surfactant are mixed in a emulsion reactor (100ml). After degassing with Nitrogen for 20 min, was the mixture heated till 80°C. When the temperature of the reaction mixture was at 80°C, 0.04 grams ($1.38 \times 10^{-4}$ mol) of the initiator (VA-86) were added. The reaction mixture was reacting for 5 hours. Aliquots were taken during the reaction to follow conversion by GC and gravimetrically and Dynamic Light Scattering (DLS) analysis.

Example 4: Anti-microbial testing.

Bacteria were grown in yeast/dextrose broth (Cunliffe *et al.* 1999) at 37 C with aeration at 200 rpm for 6-8 h. The inoculum from an overnight culture was transferred into 0.1 M PBS (approximately $10^{11}$ cells $ml^{-1}$) and then introduced into the growth medium at a 1:500 dilution. The bacterial cells were centrifuged at 5160 $\times$ *g* for 10 min and washed with distilled water twice. A bacterial suspension at a concentration of $10^6$ cells $ml^{-1}$ in distilled water was sprayed at a rate of approximate 10 ml $min^{-1}$ onto the surface of a slide in a fume hood. After drying for 2 min under air, the slide was placed in a Petri dish, and growth agar (0.7% agar in the yeast/dextrose broth, autoclaved, and cooled to 37 °C) was added. The Petri dish was sealed and incubated at 37 °C overnight. The grown bacterial colonies were counted on a light box. The waterborne bacterial suspension was prepared as follows: bacterial cells were centrifuged at 5160 $\times$ *g* for 10 min, washed twice with PBS at pH 7, re-suspended in the same buffer, and diluted to $2 \times 10^6$ cells $ml^{-1}$. A slide was immersed in 45 ml of the suspension and incubated with shaking at 200 rpm at 37 °C for 2 h, then rinsed three times with sterile PBS, and incubated in it for 1 h. The slide was immediately covered with a layer of solid growth agar (1.5% agar in the yeast/dextrose broth, autoclaved, poured into a Petri dish, and dried under reduced pressure at room temperature overnight). The bacterial colonies were then counted.

These tests were performed with two kinds of bacteria, E. coli and Staphylococcus sp. E. coli is a gram-negative bacterium and staphylococcus is a gram-positive bacterium. In Table 1 an overview is given for each coating and its antimicrobial properties.

*Table 1: Overview of antimicrobial activity of antimicrobial coatings with different concentration of surfactant (in wt%). The molecular weight of all of the surfactants is 15.000 g/mol. The quaterinzation degree of all surfactants is more than 95%.*

| Coating | Concentration surfactant (wt%) | Staphylococcus sp. Live (%) | Staphylococcus sp. Dead (%) | E. coli Live (%) | E. coli Dead (%) |
|---|---|---|---|---|---|
| BMA SDS (Blank) | 2 | 7.04 | 92.96 | 89.02 | 10.98 |
| BMA pDMTDAEMA | 7,5 | 4.81 | 95.19 | 1.22 | 98.78 |
| BMA pDMTDAEMA | 5,0 | 4.72 | 95.28 | 1.52 | 98.48 |
| BMA pDMTDAEMA | 2,5 | 5.67 | 94.33 | 2.97 | 97.03 |
| BMA pDMTDAEMA | 2 | 6.23 | 93.77 | 3.30 | 96.70 |
| Negative control (autoclaved) | | 0.06 | 99.94 | 1.57 | 98.43 |
| Positive control (saline) | | 95.33 | 4.67 | 77.98 | 22.02 |

As can be seen from Table 1, the staphylococcal strain is easily killed on all coatings, and it can be concluded that there is no difference in antimicrobial activity between these coatings on the staphylococcal strain. The E. coli strain actually shows a higher kill rate for the positive control sample relative to the blank sample. All coatings that contain the antimicrobial block copolymer show excellent antimicrobial properties against the strain of E. coli used for these tests. The antimicrobial activity increase with increasing the concentration.

Table 2 shows the effect of the molecular weight of the anti-microbial compound. It can be concluded that the

anti-microbial activity increases with increasing molecular weight.

*Table 2: Overview of antimicrobial activity of antimicrobial coatings with different molecular weight of surfactant. The quaterinzation degree of all surfactants is more than 95%. The concentration of surfactant in the emulsion polymerization is 2,5 wt%.*

| Coating | Mw of Surfactant (g/mol) | Staphylococcus sp. Live (%) | Staphylococcus sp. Dead (%) | E. coli Live (%) | E. coli Dead (%) |
|---|---|---|---|---|---|
| BMA SDS (Blank) | 289 | 7.04 | 92.96 | 89.02 | 10.98 |
| BMA pDMTDAEMA | 35000 | 1.81 | 98.19 | 1.22 | 98.78 |
| BMA pDMTDAEMA | 20000 | 1.72 | 98.28 | 1.52 | 98.48 |
| BMA pDMTDAEMA | 15000 | 3.67 | 96.33 | 2.97 | 97.03 |
| BMA pDMTDAEMA | 7500 | 10.23 | 89.77 | 7.30 | 92.70 |
| Negative control (autoclaved) | | 0.06 | 99.94 | 1.57 | 98.43 |
| Positive control (saline) | | 95.33 | 4.67 | 77.98 | 22.02 |

Example 5: preparation of poly bromo-(tetradecane-dimethylamino-propylmethacrylamide

N-(3-(dimethylamino)propyl) methacrylamide (DMAPMAA) was dissolved in 3 times by weight with respect to the amount of DMAPMAA of butyldiglycol (2,5-dimethyl-2,5-di(tert-butylperoxy)hexane). The reaction mixture was degassed with Nitrogen under stirring for at least 15 minutes. The reaction mixture was then heated to 140°C and when this temperature was reached 3.7 wt% with respect to DMAPMAA Trigonox®101 was added as an initiator. The reaction proceeded for 2 hours, after which 1.06 times by weight with respect to the amount of pDMAPMAA of 1-bromotetradecane was added. The reaction proceeded during at least 5 hours about 180°C.
$^1$H NMR analysis before and after quaternization confirmed that 95% of the pendant amines were quaternized (i.e the molar fraction of $[BB2]_A$ in the molecules was 0.95), on the basis of the $_CH_2_N_$ multiplet and the $_N_(CH_3)_2$ multiplet of PDMAPMAA at 2.8 and 2.4 ppm, respectively, which decreased to the benefit of two new signals: a singlet at 3.4 ppm for the methyl groups $[_NÞ_(CH_3)_2]$ and a multiplet at 3.7 ppm for the methylene protons $(_CH_2_NÞ_CH_2)$ of the quaternized units.
The weight average molecular weight was 47.000 g/mol. Universal calibration using Mark-Howing parameters, Alpha(0.664) and k(0.000148) values of pDMAEMA were used for homopolymers pDMAPMAA.

Example 6: Coating a substrate with a primer comprising the compound of example 4 followed by a second coating comprising a latex.

The compound obtained in example 5 was dissolved in water in a concentration of 10% wt/wt. The solution was applied onto a substrate (by brushing, spraying or the like), such that a wet layer thickness of about 100 $\mu$m was obtained. After drying for approximately 1 hour, a second coating comprising a waterborne butylmethacrylate (BMA) latex was applied. During drying and curing of the coating, at least a part of the anti-microbial primer migrated towards the surface of the coating, thus providing an anti-microbial surface.

Example 7: Emulsion polymerization of butylmethacrylate using the compound of example 5 as a surfactant.

A recipe for emulsion polymerization of BMA which is stabilized by synthesized polymeric surfactant poly-bromo(tetradecane-dimethylamino-ethylmethacrylamide (pTDMAPMAA) with concentration of 50x more than cmc is as follows:
8,0 grams (0.056 mol) of distilled BMA, 72.0 grams (4.0 mol) of dionized $H_2O$, 0.010 grams ($3.51x10^{-7}$ mol) of synthesized polymeric surfactant are mixed in a emulsion reactor (100ml). After degassing with Nitrogen for 20 min, was the mixture heated till 80°C. When the temperature of the reaction mixture was at 80°C, 0.04 grams ($1.38x10^{-4}$ mol) of the initiator (VA-86) were added. The reaction mixture was reacting for 3 hours. Aliquots were taken during the reaction to follow conversion by GC and gravimetrically and Dynamic Light Scattering (DLS) analysis.

Example 8: Anti-microbial testing.

Anti-microbial tests were performed with the compound prepared in Example 5 according to the procedure described in Example 4. The results are shown in Table 3.

Table 3 shows that the anti-microbial effect of poly-bromo(tetradecane-dimethylamino-ethylmethacrylamide, being the surfactant, is already high (i.e. 98%) at a low concentration of the surfactant (2%).

*Table 3: Overview of antimicrobial activity of antimicrobial coatings with different concentration of surfactant (in wt%). The molecular weight of all of the surfactants is 17.500 g/mol. The quaterinzation degree of all surfactants is more than 90%.*

| | | **Staphylococcus sp.** | | **E. coli** | |
|---|---|---|---|---|---|
| **Coating** | **Concentration surfactant (wt%)** | **Live (%)** | **Dead (%)** | **Live (%)** | **Dead (%)** |
| BMA SDS (Blank) | 2 | 8 | 92 | 89 | 11 |
| BMA pDMTDAPMAA | 7,5 | 1 | 99 | 1 | 99 |
| BMA pDMTDAPMAA | 5,0 | 2 | 98 | 2 | 98 |
| BMA pDMTDAPMAA | 2,5 | 2 | 98 | 2 | 98 |
| BMA pDMTDAPMAA | 2 | 2 | 98 | 2 | 98 |
| Negative control (autoclaved) | | 0.06 | 99.94 | 1.57 | 98.43 |
| Positive control (saline) | | 95.33 | 4.67 | 77.98 | 22.02 |

**Claims**

**1.** Compound comprising building blocks according to the following general formulae:

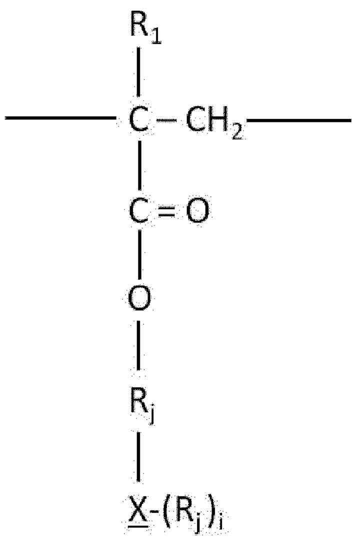

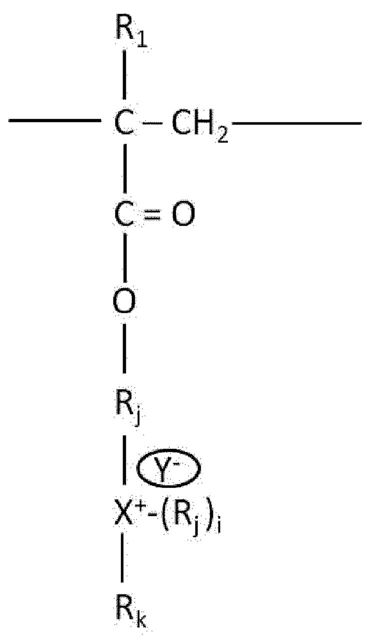

$[BB1]_E$ $[BB2]_E$

wherein:

$[BB1]_E$ is building block 1;
$[BB2]_E$ is building block 2;
$R_1$ is H or $CH_3$,
X is an element selected from nitrogen, phosphorus, oxygen and sulfur;
i is an integer which is 2 in case of nitrogen and phosphorus and 1 in case of oxygen and sulfur;
$R_j$ denotes groups which may be the same or different and comprise a $C_1$-$C_{20}$ hydrocarbyl group;
$R_k$ is a $C_7$-$C_{50}$ hydrocarbyl group;
$Y^-$ is a negatively charged ion;
and wherein the molar fraction of $[BB2]_E$ in a molecule of the compound is between 0.3 and 1 and the weight average molecular weight of the compound is between 1.000 and 100.000 g/mol, determined with GPC.

**2.** Compound according to claim 1, wherein $R_k$ is a $C_{11}$-$C_{20}$ hydrocarbyl group.

**3.** Compound according to any one of claims 1 or 2, wherein the molar fraction of $[BB2]_E$ in a molecule of the compound is between 0.70 and 0.98.

**4.** Compound according to any one of claims 1-3, wherein $Y^-$ is selected from the group consisting of chloride, bromide, iodide.

**5.** Compound according to claim 1, wherein the compound having dimethylamino-ethylmethacrylate as $[BB1]_E$ and bromo-(tetradecane-dimethylamino-ethylmethacrylate) as $[BB2]_E$, the molar fraction of $[BB2]_E$ in a molecule of the compound is between 0.90 and 0.97 and the weight average molecular weight ranges between 7.500 and 35.000 g/mol, determined with GPC.

**6.** Compound according to claim 1, wherein the compound has dimethylamino-propyl methacryl amide as $[BB1]_E$ and bromo-(tetradecane-dimethylamino-propyl methacryl amide) as $[BB2]_E$, the molar fraction of $[BB2]_E$ in a molecule of the compound is between 0.90 and 1.0 and the weight average molecular weight ranges between 10.000 and 50.000 g/mol, determined with GPC.

**7.** Composition comprising a compound according to any one of claims 1-6 and a solvent, wherein the solvent preferably is water.

**8.** Method for coating a substrate comprising the steps of:

- providing a substrate;
- applying a fist layer of a first composition comprising a compound according to any one of claims 1-7 and a solvent, wherein the solvent preferably is water;
- drying;
- applying a second layer of a coating composition onto the thus obtained substrate.

**9.** Method according to claim 8, wherein the coating composition comprises a latex composition comprising at least one of the polymers selected from the group comprising polystyrene, polyacrylate, polymethacrylate, natural rubber and derivatives thereof.

**10.** Composition according to claim 7, wherein the concentration of the compound according to any one of claims 1-6 is above the critical micelle concentration (cmc).

**11.** Method for preparing a latex composition, the method comprising the steps of:

- providing a first composition comprising a compound according any one of claims 1-6 and water, wherein the concentration of the compound according to any one of claims 1-6 in the first composition is above the critical micelle concentration (cmc);
- mixing the first composition with a monomer;
- heating the obtained mixture to a temperature between 50°C and 90°C;
- adding an initiator;
- reacting for between 1 and 10 hours.

**12.** Method for preparing a latex composition according claim 11, wherein the monomer is selected from the group comprising styrene, butyl(meth)acrylate.

## Patentansprüche

**1.** Verbindung, umfassend Bausteine gemäß dem folgenden allgemeinen Formeln:

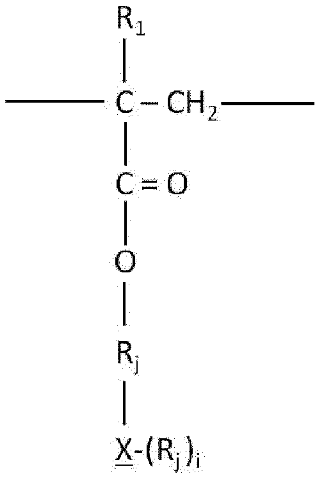

$[BB1]_E$

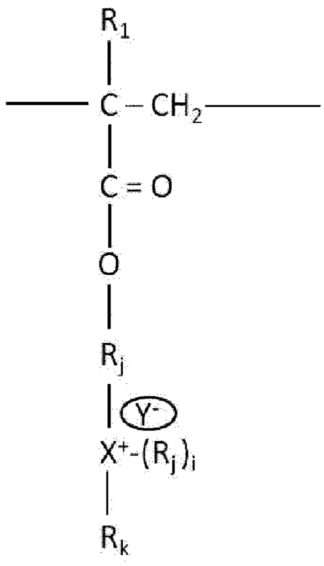

$[BB2]_E$

wobei:

$[BB1]_E$ Baustein 1 ist;
$[BB2]_E$ Baustein 2 ist;
$R_1$ für H oder $CH_3$ steht;
X ein Element ist, das aus Stickstoff, Phosphor, Sauerstoff und Schwefel ausgewählt ist;
i eine ganze Zahl ist, die im Fall von Stickstoff und Phosphor gleich 2 und im Fall von Sauerstoff und Schwefel gleich 1 ist;
$R_j$ für Gruppen steht, die gleich oder verschieden sein können und eine $C_1$-$C_{20}$-Hydrocarbylgruppe umfassen;
$R_k$ eine $C_7$-$C_{50}$-Hydrocarbylgruppe ist;
$Y^-$ ein negativ geladenes Ion ist;
und wobei der Molenbruch von $[BB2]_E$ in einem Molekül der Verbindung zwischen 0,3 und 1 liegt und das mittels GPC bestimmte gewichtsmittlere Molekulargewicht der Verbindung zwischen 1000 und 100.000 g/mol liegt.

**2.** Verbindung nach Anspruch 1, wobei $R_k$ eine $C_{11}$-$C_{20}$-Hydrocarbylgruppe ist.

**3.** Verbindung nach Anspruch 1 oder 2, wobei der Molenbruch von $[BB2]_E$ in einem Molekül der Verbindung zwischen 0,70 und 0,98 liegt.

**4.** Verbindung nach einem der Ansprüche 1-3, wobei $Y^-$ aus der Gruppe bestehend aus Chlorid, Bromid, Iodid ausgewählt ist.

**5.** Verbindung nach Anspruch 1, wobei die Verbindung Dimethylaminoethylmethacrylat als $[BB1]_E$ und Brom-(tetradecandimethylaminoethylmethacrylat) als $[BB2]_E$ aufweist, der Molenbruch von $[BB2]_E$ in einem Molekül der Verbindung zwischen 0,90 und 0,97 liegt und das mittels GPC bestimmte gewichtsmittlere Molekulargewicht im Bereich zwischen 7500 und 35.000 g/mol liegt.

**6.** Verbindung nach Anspruch 1, wobei die Verbindung Dimethylaminopropylmethacrylamid als $[BB1]_E$ und

Brom(tetradecandimethylaminopropylmethacrylamid) als $[BB2]_E$ aufweist, der Molenbruch von $[BB2]_E$ in einem Molekül der Verbindung zwischen 0,90 und 1,0 liegt und das mittels GPC bestimmte gewichtsmittlere Molekulargewicht im Bereich zwischen 10.000 und 50.000 g/mol liegt.

**7.** Zusammensetzung, umfassend eine Verbindung nach einem der Ansprüche 1-6 unter Lösungsmittel, wobei es sich bei dem Lösungsmittel vorzugsweise um Wasser handelt.

**8.** Verfahren zum Beschichten eines Substrats, das folgende Schritte umfasst:

- Bereitstellen eines Substrats;
- Aufbringen einer ersten Schicht einer ersten Zusammensetzung, die eine Verbindung nach einem der Ansprüche 1 bis 7 und ein Lösungsmittel enthält, wobei es sich bei dem Lösungsmittel vorzugsweise um Wasser handelt;
- Trocknen;
- Aufbringen einer zweiten Schicht einer Beschichtungszusammensetzung auf das so erhaltene Substrat.

**9.** Verfahren nach Anspruch 8, wobei die Beschichtungszusammensetzung eine Latexzusammensetzung umfasst, die mindestens eines der Polymere aus der Gruppe umfassend Polystyrol, Polyacrylat, Polymethacrylat, Naturkautschuk und Derivaten davon umfasst.

**10.** Zusammensetzung nach Anspruch 7, wobei die Konzentration der Verbindung nach einem der Ansprüche 1-6 über der kritischen Mizellbildungskonzentration (cmc) liegt.

**11.** Verfahren zur Herstellung einer Latexzusammensetzung, wobei das Verfahren folgende Schritte umfasst:

- Bereitstellen einer ersten Zusammensetzung, die eine Verbindung nach einem der Ansprüche 1-6 und Wasser umfasst, wobei die Konzentration der Verbindung nach einem der Ansprüche 1-6 in der ersten Zusammensetzung über der kritischen Mizellbildungskonzentration (cmc) liegt;
- Mischen der ersten Zusammensetzung mit einem Monomer;
- Erhitzen der erhaltene Mischung auf eine Temperatur zwischen 50 °C und 90 °C;
- Zugeben eines Initiators;
- Umsetzen über einen Zeitraum zwischen 1 und 10 Stunden.

**12.** Verfahren zur Herstellung einer Latexzusammensetzung nach Anspruch 11, wobei das Monomer aus der Gruppe umfassend Styrolpolymer, Butyl(meth)-acrylat ausgewählt wird.

## Revendications

**1.** Composé comprenant des blocs de construction correspondant aux formules générales suivantes :

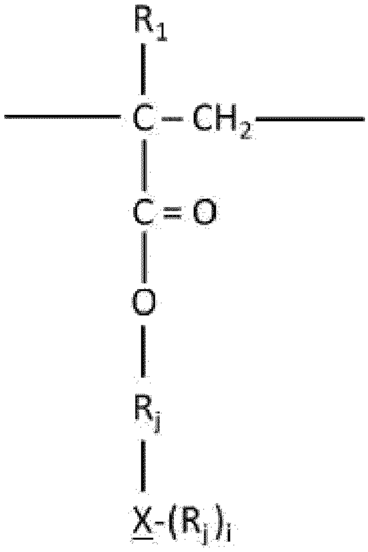

$[BB1]_E$

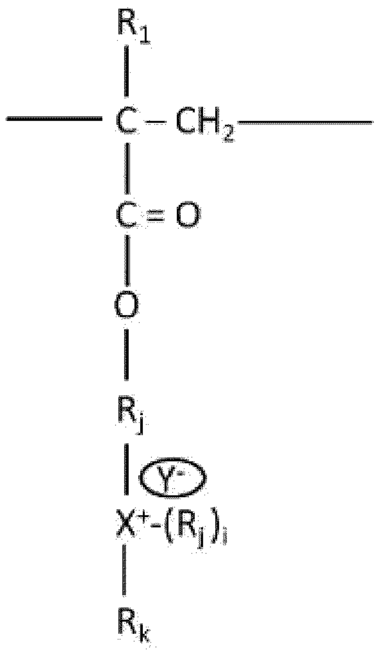

$[BB2]_E$

$[BB1]_E$ étant le bloc de construction 1 ;
$[BB2]_E$ étant le bloc de construction 2 ;
$R_1$ étant H ou $CH_3$,
X étant un élément choisi parmi azote, phosphore, oxygène et soufre ;
i étant un entier qui est 2 dans le cas de l'azote et du phosphore et 1 dans le cas de l'oxygène et du soufre ;
$R_j$ désignant des groupes qui peuvent être identiques ou différents et qui comprennent un groupe $C_{1-20}$-hydrocarbyle ;
$R_k$ étant un groupe $C_{7-50}$-hydrocarbyle ;
$Y^-$ étant un ion chargé négativement ;
et la fraction molaire de $[BB2]_E$ dans une molécule du composé étant comprise entre 0,3 et 1 et le poids moléculaire moyen en poids du composé étant compris entre 1 000 et 100 000 g/mole, déterminé par CPG.

2. Composé selon la revendication 1, $R_k$ étant un groupe $C_{11-20}$-hydrocarbyle.

3. Composé selon l'une quelconque des revendications 1 et 2, la fraction molaire de $[BB2]_E$ dans une molécule du composé étant comprise entre 0,70 et 0,98.

4. Composé selon l'une quelconque des revendications 1 à 3, $Y^-$ étant choisi dans le groupe constitué par chlorure, bromure, iodure.

5. Composé selon la revendication 1, le composé possédant du méthacrylate de diméthylamino-éthyle en tant que $[BB1]_E$ et du bromo (méthacrylate de tétradécane-diméthylamino-éthyle) en tant que $[BB2]_E$, la fraction molaire de $[BB2]_E$ dans une molécule du composé étant comprise entre 0,90 et 0,97 et le poids moléculaire moyen en poids se situant dans la plage comprise entre 7 500 et 35 000 g/mole, déterminé par CPG.

6. Composé selon la revendication 1, le composé possédant du méthacrylamide de diméthylamino-propyle en tant que $[BB1]_E$ et du bromo(méthacrylamide de tétradécane-diméthylamino-propyle) en tant que $[BB2]_E$, la fraction molaire de $[BB2]_E$ dans une molécule du composé étant comprise entre 0,90 et 1,0 et le poids moléculaire moyen en poids se situant dans la plage comprise entre 10 000 et 50 000 g/mole, déterminé par CPG.

7. Composition comprenant un composé selon l'une quelconque des revendications 1 à 6 et un solvant, le solvant étant préférablement l'eau.

**8.** Procédé pour le revêtement d'un substrat comprenant les étapes de :

- mise à disposition d'un substrat ;
- application d'une première couche d'une première composition comprenant un composé selon l'une quelconque des revendications 1 à 7 et un solvant, le solvant étant préférablement l'eau ;
- séchage ;
- application d'une deuxième couche d'une composition de revêtement sur le substrat ainsi obtenu.

**9.** Procédé selon la revendication 8, la composition de revêtement comprenant une composition de latex comprenant au moins un des polymères choisi dans le groupe comprenant le polystyrène, le polyacrylate, le polyméthacrylate, le caoutchouc naturel et des dérivés correspondants.

**10.** Composition selon la revendication 7, la concentration en composé selon l'une quelconque des revendications 1 à 6 étant supérieure à la concentration micellaire critique (cmc).

**11.** Procédé pour la préparation d'une composition de latex, le procédé comprenant les étapes de :

- mise à disposition d'une première composition comprenant un composé selon l'une quelconque des revendications 1 à 6 et de l'eau, la concentration en composé selon l'une quelconque des revendications 1 à 6 dans la première composition étant supérieure à la concentration micellaire critique (cmc) ;
- mélange de la première composition avec un monomère ;
- chauffage du mélange obtenu à une température comprise entre 50 °C et 90 °C ;
- ajout d'un initiateur ;
- mise en réaction pendant une durée comprise entre 1 et 10 heures.

**12.** Procédé pour la préparation d'une composition de latex selon la revendication 11, le monomère étant choisi dans le groupe comprenant le styrène, le (méth)acrylate de butyle.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 0210242 A